# EUROPÄISCHE PATENTSCHRIFT

(11) **EP 1 906 501 B1**
(45) Veröffentlichungstag und Bekanntmachung des Hinweises auf die Patenterteilung: **13.07.2011**
(21) Anmeldenummer: 07013841.7
(22) Anmeldetag: 14.07.2007
(51) Int. Cl.: H02G 3/18

(54) **Haltevorrichtung**
Clamping device
Dispositif de retenue

(30) Priorität: 26.09.2006 DE 102006045806
(43) Veröffentlichungstag der Anmeldung: 02.04.2008
(73) Patentinhaber: Berker GmbH & Co. KG, 58579 Schalksmühle (DE)
(72) Erfinder: Diegmann, Rolf Dieter Dipl.-Ing., 58579 Schalksmühle (DE)

(56) Entgegenhaltungen:
- DE-U1- 29 520 459
- DE-U1- 29 907 456
- GB-A- 325 608
- GB-A- 436 604

## Beschreibung

Die Erfindung betrifft eine Haltevorrichtung für ein elektrisches/elektronisches Installationsgerät gemäß Oberbegriff des Hauptanspruches.

Eine solche Haltevorrichtung ist dafür vorgesehen elektrische/elektronische Installationsgeräte, wie z. B. Steckdosen, Schaltgeräte, Anzeigeeinrichtungen usw. bedarfsgerecht in bzw. an einer Unterputzdose festzulegen. Bei der Festlegung ist darauf zu achten das einerseits ein sicherer Halt gewährleistet ist, anderseits sich das Installationsgerät bei Bedarf auf einfache Art und Weise wieder von der Unterputzdose abnehmen lässt. Zudem soll durch die Haltevorrichtung ein Toleranzausgleich gewährleistet sein, damit z. B. unterschiedliche Putzstärken, unterschiedliche Einbautiefen der Unterputzdose usw. ausgeglichen werden können.

Durch die DE 299 07 456 U1 ist eine gemäß Oberbegriff des Hauptanspruches ausgebildete Haltevorrichtung für elektrische/elektronische Installationsgeräte bekannt geworden. Diese Haltevorrichtung weist zwei an einer Unterputzdose befestigte, als Gewindemuttern ausgeführte erste Halteteile und zwei damit kooperierende zweite Halteteile auf, die als Schrauben ausgeführt sind. Die Schrauben durchgreifen das elektrische/elektronische Installationsgerät und kommen mit ihrem Kopf auf der das Erscheinungsbild prägenden Oberseite des elektrischen/elektronischen Installationsgerätes zur Anlage. Bei einer solchen Ausbildung ist es zur Festlegung mit Toleranzausgleich zunächst notwendig, die lose zur Verfügung gestellten Schrauben einzusetzen und dann soweit als möglich einzuschrauben, was entsprechend aufwendig ist. Außerdem stören die Köpfe der Schrauben das Erscheinungsbild des elektrischen/elektronischen Installationsgerätes oftmals ganz erheblich.

Des Weiteren ist durch die DE 295 20 459 U1 eine Haltevorrichtung bekannt geworden, welche für ein elektrisches Installationsgerät mit Zentralabdeckung vorgesehen ist. Die Zentralabdeckung ist dabei über eine Schraube und eine Halteklammer am Sockelteil des elektrischen Gerätes festgelegt. Die Schraube ist der als Steckertopf ausgebildeten Zentralabdeckung und die Halteklammer dem Gerätesockel der Steckdose zugeordnet. Somit ist ein schraubfunktionalfreies Befestigen der Zentralabdeckung am Gerätesockel gewährleistet. Die Schraube bleibt für den Benutzer jedoch immer von außen sichtbar.

Zudem ist es aus der GB 325 608 A bekannt, einen Gewindestift drehfest an der Deckelunterseite eines elektrischen Gerätes anzubringen.

Der vorliegenden Erfindung liegt daher die Aufgabe zugrunde, eine Haltevorrichtung für elektrische/elektronische Installationsgeräte zu schaffen, die sich besonders einfach und komfortabel auch ohne den Einsatz vor Werkzeugen Handhaben lässt und bei der die, einen variablen Toleranzausgleich von unterschiedlich großen Toleranzen sowie die Festlegung schaffenden Halteteile für den Benutzer verborgen angeordnet sind.

Die vorliegende Aufgabe wird durch die im kennzeichnenden Teil des Hauptanspruches angegebenen Merkmale gelöst.

Bei einer solchermaßen ausgebildeten Haltevorrichtung ist besonders vorteilhaft, dass die das Erscheinungsbild prägende Oberseite des elektrischen/elektronischen Installationsgerätes völlig frei von das Gesamtbild störenden Elementen bleibt.

Weitere vorteilhafte Ausgestaltungen des erfindungsgemäßen Gegenstandes sind in den Unteransprüchen angegeben. Anhand zweier in den Zeichnungen dargestellter Ausführungsbeispiele sei die Erfindung im Prinzip näher erläutert, dabei zeigen:
- Fig. 1:: prinziphaft einen Schnitt durch eine solche Haltevorrichtung ohne die Notwendigkeit eines Toleranzausgleiches gemäß erstem Ausführungsbeispiel;
- Fig.2:: prinziphaft einen Schnitt durch eine solche Haltevorrichtung mit der Notwendigkeit eines relativ kleinen Toleranzausgleiches gemäß erstem Ausführungsbeispiel;
- Fig.3:: prinziphaft einen Schnitt durch eine solche Haltevorrichtung mit der Notwendigkeit eines relativ großen Toleranzausgleiches gemäß zweitem Ausführungsbeispiel.

Wie aus den Figuren hervorgeht, weist eine solche Haltevorrichtung für ein elektrisches/elektronisches Installationsgerät zumindest ein erstes Halteteil 1 auf, das an einer Unterputzdose 2 vorhanden ist, welches mit einem zweiten Halteteil 3 kooperiert, das drehschwer an der Unterseite 4 eines elektrischen/elektronischen Installationsgerätes 5 gehalten ist.

Wie des weiteren aus den Figuren hervorgeht, ist das erste Halteteil 1 als aus Metall gefertigte Rastfeder ausgebildet, welches zwei federelastisch auslenkbare Rastarme 6 aufweist. Über, der Einfachheit halber nicht näher dargestellte, Rastzungen ist das erste Halteteil 1 in einer Halteausnehmung 7 eines an der Unterputzdose 2 befestigten Adapterteils 8 festgelegt. Das zweite Halteteil 3 ist als Gewindestift ausgeführt, der einerseits drehschwer in eine an der Unterseite 4 des elektrischen/elektronischen Installationsgerätes 5 vorhandenen Bohrung 9 eingeschraubt ist. Um eine drehschwere Verbindung des zweiten Halteteils 3 zu schaffen, wird das zweite Halteteil 3 selbstschneidend in die Bohrung 9 mit einer entsprechenden Selbsthemmung eingeschraubt. Andererseits ist auf das als Gewindestift ausgeführte zweite Halteteil 3 eine Haltebuchse 10 aufgeschraubt, die direkt mit dem ersten Halteteil 1 in Wirkverbindung kommt. Um eine ausreichende Rastwirkung und damit praxisgerechte Festlegung des elektrischen/elektronischen Installationsgerätes 5 sicherzustellen, ist die Haltebuchse 10 an ihrer Außenseite mit einem Rastwulst 11 versehen. Damit unterschiedlich große Toleranzen X ausgeglichen werden können, kann die Haltebuchse 10 durch Drehung hinsichtlich ihrer Position auf dem zweiten Halteteil 3 bzw. auf eine Gewindestiftverlängerung 13 stufenlos eingestellt werden.

Das Adapterteil 8 ist als separates Bauteil ausgeführt und über miteinander in Wirkverbindung kommende Rastmittel 12 an der Unterputzdose 2 festgelegt. Bei den vorliegenden Ausführungsbeispielen sind jeweils zwei Adapterteile 8, zwei erste Halteteile 1 und zwei damit kooperierende zweite Halteteile 3 vorgesehen.

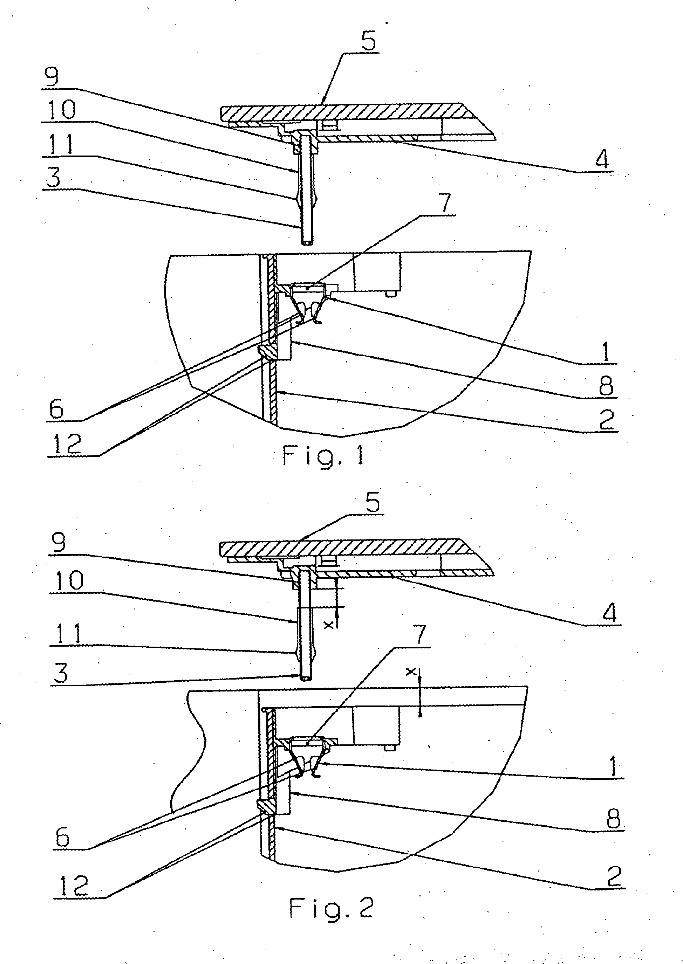

Wie insbesondere aus Figur 1 hervorgeht, ist die Unterputzdose 2 derart in die Wand eingebaut, dass zur bedarfsgerechten Festlegung des elektrischen/elektronischen Installationsgerätes 5 kein Toleranzausgleich notwendig ist. Das bedeutet, dass die Haltebuchse 10 soweit auf das als Gewindestift ausgeführte zweite Halteteil 3 aufgeschraubt ist, so dass es mit seinem oberen Ende direkt an der Unterseite 4 des elektrischen/elektronischen Installationsgerätes 5 zur Anlage kommt. Die Haltebuchse 10 befindet sich somit in ihrer oberen Position. Wird das elektrische/elektronische Installationsgerät 5 in die Unterputzdose 2 eingebaut, so kommt die Haltebuchse 10 direkt mit dem als Rastfeder ausgebildeten ersten Halteteil 1 in Wirkverbindung. Um dies zu erreichen, braucht das elektrische/elektronische Installationsgerät 5 lediglich mit entsprechender Kraft in die Unterputzdose 2 eingedrückt werden. Das als Rastfeder ausgebildete erstes Halteteil 1 schnappt letztendlich mit seinen beiden federelastisch auslenkbaren Rastarmen 6 hinter die an der Außenseite der Haltebuchse 10 vorhandene Rastwulst 11. Somit ist das elektrische/elektronische Installationsgerät 5 auf komfortable Art und Weise positionssicher in bzw. an der Unterputzdose 2 festgelegt. Da die den Toleranzausgleich und die Festlegung schaffenden Halteteile 1, 3 der Unterseite des elektrischen/elektronischen Installationsgerätes 5 zugeordnet sind, ist die das Erscheinungsbild prägende Oberseite des elektrischen/elektronischen Installationsgerätes 5 völlig frei von das Gesamtbild störenden Elementen.

Wie insbesondere aus Figur 2 hervorgeht, ist die Unterputzdose 2 derart in die Wand eingebaut, dass zur bedarfsgerechten Festlegung des elektrischen/elektronischen Installationsgerätes 5 ein geringfügiger Toleranzausgleich notwendig ist. Das bedeutet, dass die Haltebuchse 10 soweit auf das als Gewindestift ausgeführte zweite Halteteil 3 aufgeschraubt ist, so dass es seine Position im mittleren Bereich des zweiten Halteteils 3 einnimmt. Die Haltebuchse 10 befindet sich somit in ihrer mittleren Position. Wird das elektrische/elektronische Installationsgerät 5 in die Unterputzdose 2 eingebaut, so kommt die Haltebuchse 10 direkt mit dem als Rastfeder ausgebildeten ersten Halteteil 1 in Wirkverbindung. Um dies zu erreichen, braucht das elektrische/elektronische Installationsgerät 5 lediglich mit entsprechender Kraft in die Unterputzdose 2 eingedrückt werden. Das als Rastfeder ausgebildete erste Halteteil 1 schnappt letztendlich mit seinen beiden federelastisch auslenkbaren Rastarmen 6 hinter die an der Außenseite der Haltebuchse 10 vorhandene Rastwulst 11. Somit ist das elektrische/elektronische Installationsgerät 5 auf komfortable Art und Weise positionssicher in bzw. an der Unterputzdose 2 festgelegt, wobei automatisch der notwendige Toleranzausgleich erfolgt. Da die den Toleranzausgleich und die Festlegung schaffenden Halteteile 1, 3 der Unterseite des elektrischen/elektronischen Installationsgerätes 5 zugeordnet sind, ist die das Erscheinungsbild prägende Oberseite des elektrischen/elektronischen Installationsgerätes 5 völlig frei von das Gesamtbild störenden Elementen.

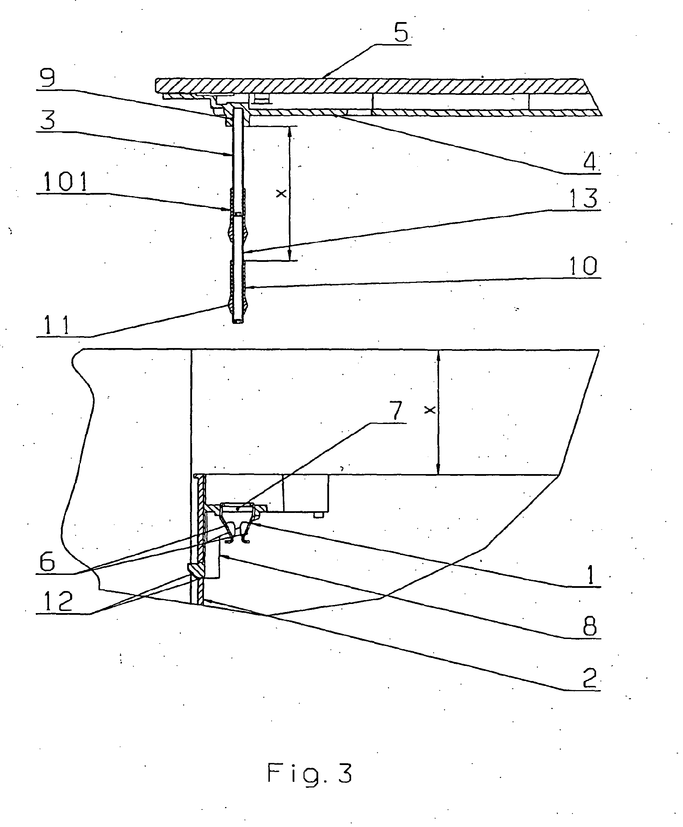

Wie insbesondere aus Figur 3 hervorgeht, ist die Unterputzdose 2 derart in die Wand eingebaut, dass zur bedarfsgerechten Festlegung des elektrischen/elektronischen Installationsgerätes 5 ein großer Toleranzausgleich notwendig ist. Beim vorliegenden zweiten Ausführungsbeispiel ist der notwendige Toleranzausgleich so groß, dass das als Gewindestift ausgeführte zweite Halteteil 3 mit einer Gewindestiftverlängerung 13 versehen werden muss. Die Gewindestiftverlängerung 13 wird dabei durch eine zweite Haltebuchse 101 an dem zweiten Halteteil 3 festgelegt. Sowohl der freie Endbereich des zweiten Halteteils 3, als auch einer der beiden freien Endbereiche der Gewindestiftverlängerung 13 sind jeweils zu 50 % in die zweite Haltebuchse 101 eingeschraubt. Um einen derart großen Toleranzausgleich zu schaffen, ist die Haltebuchse 10 soweit auf die Gewindestiftverlängerung 13 aufgeschraubt, so dass diese ihre Position im mittleren Bereich der Gewindestiftverlängerung 13 einnimmt. Wird das elektrische/elektronische Installationsgerät 5 in die Unterputzdose 2 eingebaut, so kommt die Haltebuchse 10 direkt mit dem als Rastfeder ausgebildeten ersten Halteteil 1 in Wirkverbindung. Um dies zu erreichen, braucht das elektrische/elektronische Installationsgerät 5 lediglich mit entsprechender Kraft in die Unterputzdose 2 eingedrückt werden. Das als Rastfeder ausgebildete erste Halteteil 1 schnappt letztendlich mit seinen beiden federelastisch auslenkbaren Rastarmen 6 hinter die an der Außenseite der Haltebuchse 10 vorhandene Rastwulst 11. Somit ist das elektrische/elektronische Installationsgerät 5 auf komfortable Art und Weise positionssicher in der Unterputzdose 2 festgelegt, wobei automatisch der notwendige Toleranzausgleich erfolgt. Da die den Toleranzausgleich und die Festlegung schaffenden Halteteile 1, 3 der Unterseite des elektrischen/elektronischen Installationsgerätes 5 zugeordnet sind, ist die das Erscheinungsbild prägende Oberseite des elektrischen/elektronischen Installationsgerätes 5 völlig frei von das Gesamtbild störenden Elementen.

## Patentansprüche

1. Haltevorrichtung für ein elektrisches/elektronisches Installationsgerät, wobei zumindest ein erstes Halteteil an einer Unterputzdose und zumindest ein damit kooperierendes zweites Halteteil an dem elektrischen/elektronischen Installationsgerät vorhanden ist, **dadurch gekennzeichnet, dass** das erste Halteteil (1) als Rastfeder, und dass das zweite Halteteil (3) als unter Selbsthämmung in eine an der Unterseite (4) des elektrischen/elektronischen Installationsgerätes (5) befindliche Bohrung (9) eingeschraubter Gewindestift ausgeführt ist, und dass auf das als Gewindestift ausgeführte zweite Halteteil (3) eine, direkt mit dem als Rastfeder ausgebildeten ersten Halteteil (1) in Wirkverbindung kommende, in ihrer Position stufenlos einstellbare Haltebuchse (10) aufgeschraubt ist.

2. Haltevorrichtung nach Anspruch 1, **dadurch gekennzeichnet, dass** die Haltebuchse (10) zumindest einen, die Rastwirkung sicherstellenden Rastwulst (11) aufweist.

3. Haltevorrichtung nach einem der Ansprüche 1 oder 2, **dadurch gekennzeichnet, dass** über eine zweite Haltebuchse (101) am als Gewindestift ausgeführten zweiten Halteteil (3) eine Gewindestiftverlängerung (13) festlegbar ist.

4. Haltevorrichtung nach einem der Ansprüche 1 bis 3, **dadurch gekennzeichnet, dass** zumindest ein als Rastfeder ausgeführtes erstes Halteteil (1) einstückig an der Unterputzdose (2) vorhanden ist.

5. Haltevorrichtung nach einem der Ansprüche 1 bis 4, **dadurch gekennzeichnet, dass** zumindest ein als Rastfeder ausgeführtes erstes Halteteil (1) an einem an der Unterputzdose (2) angebrachten Adapterteil (8) vorhanden ist.

6. Haltevorrichtung nach Anspruch 5, **dadurch gekennzeichnet, dass** zumindest ein Adapterteil (8) als separates Bauteil ausgeführt und rastend an der Unterputzdose (2) festlegbar ist.

7. Haltevorrichtung nach einem der Ansprüche 1 bis 6, **dadurch gekennzeichnet, dass** das zumindest ein als Rastfeder ausgeführtes erstes Halteteil (1) aus Metall hergestellt und in einer an der Unterputzdose (2) vorhandenen Halteausnehmung (7) festlegbar ist.

8. Haltevorrichtung nach einem der Ansprüche 1 bis 7, **dadurch gekennzeichnet, dass** das zumindest ein als Rastfeder ausgeführtes erstes Halteteil (1) aus Metall hergestellt und in einer an dem Adapterteil (8) vorhandenen Halteausnehmung (7) festlegbar ist.

## Claims

1. Retention facility for an electrical/electronic installation device, for which purpose at least one first retention member is provided on a flush-mounted box and at least one second retention member cooperating with the same is provided on the electrical/electronic installation device, **characterised in that** the first retention member (1) is designed as a catch spring and that the second retention member (3) is designed as a threaded pin screwed in a self-locking manner into a hole (9) located on the underside (4) of the electrical/electronic installation device (5), and that a retaining bush (10), which is infinitely variable as regards its position, is screwed onto the second retention member (3) designed as a threaded pin, forming a direct operative connection with the first retention member (1) designed as a catch spring.

2. Retention facility in accordance with Claim 1, **characterised in that** the retaining bush (10) features at least one snap-in bead (11) warranting the locking effect.

3. Retention facility in accordance with either Claim 1 or Claim 2, **characterised in that** a threaded pin extension (13) can be localised on the second retention member (3) designed as a threaded pin by means of a second retaining bush (101).

4. Retention facility in accordance with any of Claims 1 to 3, **characterised in that** there is at least one first retention member (1) designed as a catch spring integrally formed onto the flush-mounted box (2).

5. Retention facility in accordance with any of Claims 1 to 4, **characterised in that** at least one first retention member (1) designed as a catch spring is provided on an adapter element (8) affixed to the flush-mounted box (2).

6. Retention facility in accordance with Claim 5, **characterised in that** at least one adapter element (8) is designed as a separate component and can be localised on the flush-mounted box (2) in a latching manner.

7. Retention facility in accordance with any of Claims 1 to 6, **characterised in that** at least one first retention member (1) designed as a catch spring is made of metal and can be localised in a retaining recess (7) provided on the flush-mounted box (2).

8. Retention facility in accordance with any of Claims 1 to 7, **characterised in that** the at least one retention member (1) designed as a catch spring is made of metal and can be localised in a retaining recess (7) provided on the adapter element (8).

## Revendications

1. Dispositif de retenue pour un appareil d'installation électrique / électronique tel qu'un premier élément de retenue, au minimum, soit mis en place sur une prise sous crépi et qu'au moins un deuxième élément de retenue coopérant avec lui soit monté sur l'appareil d'installation électrique / électronique, **caractérisé en ce que** le premier élément de retenue (1) est réalisé sous la forme d'un ressort d'encliquetage, que le deuxième élément de retenue (3) est réalisé sous la forme d'une tige filetée vissée sous blocage automatique dans un alésage (9) situé sur la face inférieure (4) de l'appareil d'installation électrique / électronique (5), et qu'une douille de retenue (10) réglable en continu dans sa position et agissant directement en lien avec le premier élément de retenue (1) réalisé sous la forme d'un ressort d'encliquetage est vissée sur le deuxième élément de retenue réalisé sous la forme d'une tige filetée (3).

2. Dispositif de retenue selon la revendication 1 **caractérisé en ce que** la douille de retenue (10) présente au minimum un bourrelet d'encliquetage (11) garantissant l'effet d'encliquetage.

3. Dispositif de retenue selon l'une des revendications 1 ou 2 **caractérisé en ce que**, par l'intermédiaire d'une deuxième douille de retenue (101), une rallonge de tige filetée (13) peut être fixée sur le deuxième élément de retenue (3) réalisé sous la forme d'une tige filetée.

4. Dispositif de retenue selon l'une des revendications 1 à 3 **caractérisé en ce que**, au minimum, un premier élément de retenue (1) réalisé sous la forme d'un ressort d'encliquetage est mis en place en tant que monobloc sur la prise sous crépi (2).

5. Dispositif de retenue selon l'une des revendications 1 à 4 **caractérisé en ce qu'**un premier élément de retenue (1) réalisé sous la forme d'un ressort d'encliquetage est monté sur un élément d'adaptation (8) mis en place sur la prise sous crépi (2).

6. Dispositif de retenue selon la revendication 5 **caractérisé en ce qu'**un élément d'adaptation (8), au minimum, réalisé sous la forme d'un composant séparé peut être fixé et encliqueté sur la prise sous crépi (2).

7. Dispositif de retenue selon l'une des revendications 1 à 6 **caractérisé en ce que**, au minimum, un premier élément de retenue (1) réalisé sous la forme d'un ressort d'encliquetage est fabriqué en métal et peut être fixé dans un évidement de retenue (7) présent sur la prise sous crépi (2).

8. Dispositif de retenue selon l'une des revendications 1 à 7 **caractérisé en ce que**, au minimum, un premier élément de retenue (1) réalisé sous la forme d'un ressort d'encliquetage est fabriqué en métal et peut être fixé dans un évidement de retenue (7) présent sur l'élément d'adaptation (8).
